# EUROPÄISCHE PATENTSCHRIFT

(11) **EP 0 799 862 B1**
(45) Veröffentlichungstag und Bekanntmachung des Hinweises auf die Patenterteilung: **31.10.2001**
(21) Anmeldenummer: 97104942.4
(22) Anmeldetag: 24.03.1997
(51) Int. Cl.: C09B 48/00, C09B 67/10, C09B 67/22

(54) **Verfahren zur Herstellung von Chinacridonpigmenten**
Process for the manufacture of quinacridone pigments
Procédé de fabrication de pigments de quinacridone

(30) Priorität: 02.04.1996 DE 19613186
(43) Veröffentlichungstag der Anmeldung: 08.10.1997
(73) Patentinhaber: Clariant GmbH, 65929 Frankfurt am Main (DE)
(72) Erfinder: Urban, Manfred, 65205 Wiesbaden (DE); Schnaitmann, Dieter Dr., 65817 Eppstein (DE); Böhmer, Martin, 61267 Neu-Anspach (DE)

(56) Entgegenhaltungen:
- EP-A- 0 655 485
- EP-A- 0 666 288
- EP-A- 0 682 090
- DE-A- 1 569 787
- FR-A- 1 265 225
- FR-A- 1 324 828
- FR-A- 1 496 960

## Beschreibung

Gegenstand der vorliegenden Erfindung ist ein besonders umweltfreundliches und wirtschaftliches Verfahren zur Herstellung von Chinacridonpigmenten. Hierunter fallen die linearen unsubstituierten und substituierten Chinacridonpigmente sowie Mischungen, Pigmentzubereitungen und Mischkristalle auf Basis dieser Pigmente.

Chinacridonpigmente sind seit langem bekannt. In der Praxis werden hohe Anforderungen an ihre Echtheiten und coloristischen Eigenschaften gestellt. Deshalb kommt dem Herstellungs- und Feinverteilungsprozeß große Bedeutung zu. Für die Herstellung von Chinacridonpigmenten gibt es zwei bevorzugte Synthesewege. In technischem Maßstab erfolgt ihre Herstellung durch Oxidation von Dihydrochinacridonen in alkalischem Medium in Gegenwart von Lösemitteln und anschließender Trocken- oder Naßmahlung der erhaltenen grobkristallinen Rohpigmente oder durch Ringschluß von 2,5-Dianilinoterephthalsäure in Polyphosphorsäure oder Polyphosphorsäureester und anschließende Phasenumwandlung und Finish der erhaltenen feinteiligen Rohpigmente mit organischen Lösemitteln.
Je nach Syntheseweg fallen dabei die Rohpigmente entweder in feinteiliger oder in grobkristalliner Form an. Die feinteilig anfallenden Rohpigmente brauchen vor der Finishbehandlung nicht mehr feinverteilt zu werden, während die grobkristallin anfallenden Rohpigmente vor der Finishbehandlung feinverteilt werden müssen. Solche Feinverteilungsverfahren sind z.B. Acidpasting-, Trockenmahl- und Naßmahlverfahren. Auch Kombinationen dieser Verfahren werden beschrieben.

Die Herstellung von Chinacridonpigmenten, -pigmentzubereitungen und -mischkristallpigmenten ist in der nachfolgend aufgeführten Literatur beschrieben:

Die DE-A-1 150 046 beschreibt ein Verfahren zur Herstellung von linearen unsubstituierten Chinacridonpigmenten der β-Phase durch Ringschluß von 2,5-Dianilinoterephthalsäure in Polyphosphorsäure oder Polyphosphorsäureester und anschließende Behandlung der bei der Hydrolyse auf Eiswasser erhaltenen feinteiligen feuchten Rohpigmente der α-Phase. Die Phasenumwandlung erfolgt in mindestens der achtfachen Menge einer mindestens 5 %igen Alkalilösung, bezogen auf das Rohpigment. Die feinteiligen Chinacridonrohpigmente der β-Phase werden anschließend durch einen Lösemittelfinish in die Pigmentform überführt. Dabei fallen große Mengen Alkali an, die das Abwasser belasten und das Verfahren unwirtschaftlich machen.

Die DE-A-1 181 159 beschreibt ein Verfahren zur Herstellung von linearen unsubstituierten Chinacridonpigmenten der β-Phase durch Ringschluß von 2,5-Dianilinoterephthalsäure in Polyphosphorsäure und anschließende Solvolyse des Reaktionsgemischs. Dabei werden die Pigmente direkt in der β-Phase erhalten. Es werden große Mengen organischer Lösemittel eingesetzt, die aus dem Phosphorsäure/Wasser/Lösemittelgemisch abgetrennt und wieder aufbereitet werden müssen. Aus diesem Grund ist das Verfahren aufwendig und ökologisch bedenklich.

Die EP-A-0 682 090 beschreibt ein Verfahren zur Herstellung von linearen unsubstituierten Chinacridonpigmenten der β-Phase durch Ringschluß von 2,5-Dianilinoterephthalsäure in Polyphosphorsäure oder Polyphosphorsäureester und anschließende Solvolyse des Ringschlußgemischs. Dabei werden die Pigmente direkt in der β-Phase erhalten. Beim Ringschluß werden Eisensalze zugesetzt. Dadurch erhält man Pigmente mit besonders tiefem Vollton und blauer Nuance. Auch bei diesem Verfahren werden große Mengen organischer Lösemittel eingesetzt, die aus dem Phosphorsäure/Wasser/Lösemittelgemisch abgetrennt und wieder aufbereitet werden müssen. Daher ist auch dieses Verfahren aufwendig und ökologisch bedenklich.

Die EP-A-0 655 485 beschreibt ein Verfahren zur Herstellung von linearen unsubstituierten Chinacridonpigmenten der β-Phase durch Ringschluß von 2,5-Dianilinoterephthalsäure in Polyphosphorsäure oder Polyphosphorsäureester und anschließende Behandlung der bei der Hydrolyse auf Eiswasser erhaltenen feinteiligen feuchten Rohpigmente der α-Phase mit geringen Mengen Alkali und Lösemittel, wobei die Überführung in die β-Phase und in die Pigmentform erfolgt. Vorteilhafterweise werden die feinteiligen Rohpigmente der α-Phase vor der Phasenumwandlung einer Dispergierung unterworfen. Die Phasenumwandlung muß in einer zusätzlichen Stufe mit großen Mengen Lösemittel im alkalischen Medium durchgeführt werden. Außerdem müssen die Lösemittel wieder aufbereitet werden. Aus diesem Grund ist das Verfahren teuer. Die coloristischen Eigenschaften dieser Pigmente genügen nicht allen Anforderungen.

Die DE-A-1 184 881 beschreibt ein Verfahren zur Herstellung von linearen unsubstituierten Chinacridonpigmenten der γ-Phase durch Ringschluß von 2,5-Dianilinoterephthalsäure in Polyphosphorsäure und anschließende Hydrolyse auf Eiswasser. Die dabei erhaltenen Rohchinacridone werden anschließend mit wäßrigem Alkali behandelt und nach der Abtrennung in Form von wäßrigen neutralen Pasten unter Druck auf 120 bis 200 °C erhitzt. Das Verfahren ist aufwendig, da der Finish in zwei Stufen durchgeführt wird. Die Echtheiten entsprechen nicht mehr den heutigen Anforderungen, insbesondere bei transparenten Pigmenten.

Die Deutsche Patentschrift DE-A-1 261 106 beschreibt ein Verfahren zur Verbesserung der Pigmenteigenschaften linearer substituierter Chinacridone durch Ringschluß der substituierten Dianilinoterephthalsäuren in Polyphosphorsäure und anschließenden Lösemittelfinish der nach der Hydrolyse erhaltenen feuchten feinteiligen Rohpigmente bei erhöhter Temperatur unter Druck. Hierbei werden große Mengen Lösemittel eingesetzt, die wieder aufbereitet werden müssen und die das Verfahren verteuern.

Die US-PS 3 160 510 beschreibt die Herstellung von Chinacridonmischkristallpigmenten durch Trockenmahlung der Rohpigmentmischungen mit Salz und anschließende Lösemittelbehandlung der abgetrennten Mahlgüter oder durch Schwefelsäureumfällung der Pigmentmischungen und anschließende Lösemittelbehandlung der getrockneten feinteiligen Rohpigmente. Es fallen große Mengen Salz oder verdünnte Schwefelsäure an, die wieder aufbereitet werden müssen. Aus diesem Grund ist dieses Verfahren unwirtschaftlich.

Die DE-A-3 106 906 beschreibt die Herstellung von Pigmentzubereitungen auf Basis von sulfonamid- und carbonamidgruppenhaltigen Chinacridonverbindungen.

Die EP-A-0069396 beschreibt die Herstellung von Chinacridonpigmentzubereitungen durch Trockenmahlung der Rohpigmente und Pigmentdispergatoren in Gegenwart von geringen Mengen anorganischer Salze und anschließende Rollmahlung in organischen Lösemitteln. Dieses Verfahren ist sehr aufwendig, weil es ein zweistufiges Mahlverfahren ist. Bei der Lösemittelmahlung fallen große Mengen Lösemittel an, die wieder aufbereitet werden müssen.

Der vorliegenden Erfindung lag die Aufgabe zu Grunde, ein umweltfreundliches und kostengünstiges Verfahren zur Herstellung von Chinacridonpigmenten zur Verfügung zu stellen, das die Nachteile des Standes der Technik überwindet.

Es wurde gefunden, daß Chinacridonpigmente mit hervorragenden coloristischen und rheologischen Eigenschaften in hoher Ausbeute und Reinheit überraschenderweise durch Hochtemperaturhydrolyse der nach der Cyclisierung von Dianilinoterephthalsäuren in Polyphosphorsäure oder Polyphosphorsäureestern vorliegenden Ringschlußgemische hergestellt werden können.

Gegenstand der vorliegenden Erfindung ist ein Verfahren zur Herstellung von Pigmenten, Mischkristallpigmenten und Pigmentzubereitungen auf Basis von linearen unsubstituierten oder substituierten Chinacridonen der allgemeinen Formel (I) 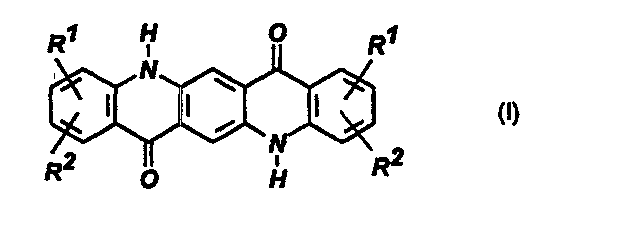 worin die Substituenten R¹ und R² gleich oder verschieden sind und Wasserstoff-, Chlor-, Brom- oder Fluoratome oder C₁-C₄-Alkyl-,C₁-C₄-Alkoxy-, Carbonamidogruppen, die durch C₁-C₆-Alkylgruppen substituiert sein können; oder Phenoxy- oder C₆-C₁₀-Arylringe, an die noch weitere aromatische, aliphatische oder heterocyclische Ringe annelliert sein können, bedeuten, dadurch gekennzeichnet, daß man das bei der Cyclisierung der Dianilinoterephthalsäure der Formel (Ia) 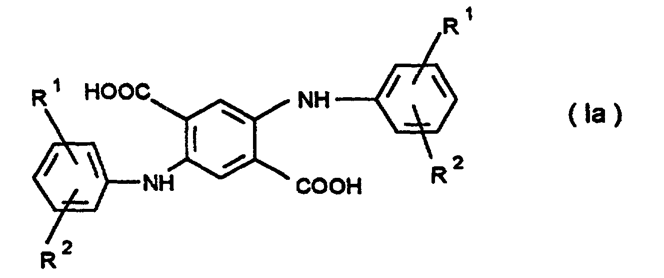 mit Polyphosphorsäure oder - ester entstandene Reaktionsgemisch bei einer Temperatur von oder über 110 °C mit Wasser oder einer wäßrigen Mineralsäurelösung hydrolysiert und anschließend die dalbei erhaltenen Pigmente direkt isoliert; oder die entstehenden Präpigmente, gegebenenfalls nach Zusatz von organischen Lösemitteln, einer Finishbehandlung unterwirft und die Pigmente isoliert; oder die entstehenden grobkristallinen Rohpigmente einer Feinverteilung unterwirft und anschließend die Pigmente isoliert; oder die bei der Feinverteilung erhaltenen Präpigmente, gegebenenfalls nach Zusatz von Lösemitteln, einer Finishbehandlung unterwirft und die Pigmente isoliert.

Die Reste R¹ und R² bedeuten vorzugsweise Wasserstoff, Methyl, Chlor, Carbonamido oder eine Kombination davon.
Bei der Cyclisierungsreaktion wird als Ringschlußmittel im allgemeinen die 3- bis 10fache Menge, vorzugsweise die 3- bis 5fache Menge, Polyphosphorsäure oder -ester, bezogen auf das Gewicht der Dianilinoterephthalsäure, eingesetzt. Der P₂O₅-Gehalt der Polyphosphorsäure oder des -esters liegt zwischen 80 und 85 Gew.-%, entsprechend einem Phosphorsäureäquivalent von 110 bis 120 %. Größere Mengen an Ringschlußmittel können verwendet werden, dies ist aber im allgemeinen nicht erforderlich. Die Ringschlußtemperatur beträgt 80 bis 150 °C, vorzugsweise 120 bis 140°C.
Die Reaktionszeit der Cyclisierung beträgt im allgemeinen 0,5 bis 24 Stunden, vorzugsweise 1 bis 2 Stunden.

Die nach der Cyclisierung vorliegenden Reaktionsgemische werden bei einer Temperatur von oder über 110 °C, vorzugsweise 110 bis 180°C, besonders bevorzugt 135 bis 165°C, mit Wasser oder verdünnter Phosphorsäure unter Druck hydrolysiert. Dabei werden die Hydrolyseprodukte entweder direkt als Pigmente, als Präpigmente (feinteilige Rohpigmente) oder als grobkristalline Rohpigmente erhalten. Die Pigmente werden nach der Hydrolyse in üblicher Weise isoliert. Die Präpigmente und die Rohpigmente müssen noch einer Nachbehandlung unterzogen werden. Die Präpigmente werden, gegebenenfalls nach einer Zwischenisolierung, einer thermischen Nachbehandlung mit oder ohne Zusatz von Lösemitteln bei einer Temperatur von 50 bis 200 °C unterworfen und nach der Abtrennung des Lösemittels isoliert. Die grobkristallinen Rohpigmente werden einer mechanischen Feinverteilung unterworfen und anschließend die dabei erhaltenen Pigmente in üblicher Weise isoliert oder die dabei erhaltenen Präpigmente werden, gegebenenfalls nach einer Zwischenisolierung, einer Finishbehandlung mit oder ohne Zusatz von organischen Lösemitteln bei einer Temperatur von 50 bis 200 °C unterworfen und nach der Abtrennung der Lösemittel isoliert.
Die Feinverteilung kann durch Trocken- oder durch Naßmahlung erfolgen. Bevorzugt wird eine Naßmahlung mit hohem Energieeintrag durchgeführt, weil hierzu das Rohpigment nicht getrocknet werden muß.

Bei dem erfindungsgemäßen Verfahren werden Hydrolyse, gegebenenfalls Phasenumwandlung und Finish auf elegante Weise miteinander kombiniert.
Bei Pigmenten, die in mehreren Phasen vorliegen können, z.B. das unsubstituierte lineare Chinacridon, gelingt die direkte Überführung in die coloristisch wertvolle β-Phase ohne zusätzliche Zwischenstufe zur Phasenumwandlung.
Durch die Wahl der Dianiloterephthalsäuren, der Ringschluß-, Hochtemperaturhydrolyse- und Aufarbeitungsbedingungen werden gebrauchsfähige Pigmente bereits unmittelbar nach der Hochtemperaturhydrolyse erhalten, oder es entstehen zunächst Präpigmente, die einer Finishbehandlung bei erhöhten Temperaturen unterworfen werden müssen, oder es entstehen zunächst grobkristalline Rohpigmente, die einer mechanischen Feinverteilung unterworfen werden müssen und direkt oder nach einer Finishbehandlung in eine gebrauchsfähige Pigmentform überführt werden.

Zur Verbesserung der coloristischen Eigenschaften und zur Erzielung bestimmter coloristischer Effekte können an einer beliebigen Stelle des Verfahrens Lösemittel, Pigmentdispergatoren, oberflächenaktive Mittel, Entschäumer, Extender oder andere Zuschlagstoffe zugesetzt werden. Es können auch Mischungen dieser Zusatzstoffe verwendet werden. Die Zugabe der Zusatzstoffe kann auf einmal oder in mehreren Portionen erfolgen. Die Zugabe kann vor, während oder nach dem Ringschluß, bei der Hochtemperaturhydrolyse, der Mahlung oder der Finishbehandlung oder während oder nach der Isolierung vorgenommen werden. Der am besten geeignete Zeitpunkt muß zuvor durch orientierende Versuche ermittelt werden.

Für die Hydrolyse wird Wasser oder verdünnte Mineralsäure, vorzugsweise verdünnte Orthophosphorsäure verwendet. Dabei wird das Ringschlußgemisch unter Druck in das Wasser oder die verdünnte Mineralsäurelösung, die eine Temperatur von oder über 110°C hat, eindosiert. Es kann aber auch umgekehrt verfahren werden. Die Hochtemperaturhydrolyse kann kontinuierlich oder diskontinuierlich durchgeführt werden. Vorteilhafterweise wird sie kontinuierlich in einem statischen Mischer durchgeführt. Im allgemeinen wird, bezogen auf die Polyphosphorsäure(ester), die 2- bis 10fache Menge Wasser oder verdünnte Phosphorsäure eingesetzt. Die Mengenverhältnisse können in weiten Grenzen schwanken. Die Dauer der Hydrolyse ist abhängig von der Dosiergeschwindigkeit der Ringschlußschmelze.

Beim Ringschluß und bei der Hydrolyse können Lösemittel, oberflächenaktive Mittel und Pigmentdispergatoren zugesetzt werden. Diese Zusätze müssen unter den Reaktionsbedingungen beständig sein. Es ist vorteilhaft, die hydrolysierten Ringschlußgemische noch einer erhöhten Temperatur, vorzugsweise bei 120 bis 150 °C, für 0,5 bis 24 Stunden, vorzugsweise 0,5 bis 5 Stunden, auszusetzen.

Die Feinverteilung kann durch Trocken- oder Naßmahlung erfolgen. Für die Trockenmahlung eignen sich alle diskontinuierlichen und kontinuierlichen Schwing- oder Rollmühlen und für die Naßmahlung alle diskontinuierlichen und kontinuierlichen Rührwerkskugel-, Roll- und Schwingmühlen sowie Kneter. Zur Naßmahlung werden die Rohpigmentsuspensionen direkt oder die nach einer Zwischenisolierung erhaltenen, feuchten Preßkuchen oder die getrockneten grobkristallinen Rohpigmente mit Wasser bis zu einer mahlfähigen Konsistenz verdünnt. Als Mahlkörper dienen Kugeln aus Zirkonoxid, Zirkonmischoxid, Aluminiumoxid, Stahl oder Quarz vom Durchmesser 0,2 bis 20 mm. Besonders geeignet sind Rührwerkskugelmühlen. Für die Naßmahlung ist eine hohe Mahlwirkung von Vorteil. Für eine Mahlung der gesuchten Effizienz sind z.B. Rührwerkskugelmühlen geeignet, die zum diskontinuierlichen und kontinuierlichen Arbeitsablauf ausgelegt sind, einen zylinderförmigen oder hohlzylinderförmigen Mahlraum in horizontaler oder vertikaler Bauweise aufweisen und die mit einer spezifischen Leistungsdichte von über 2,5 kW pro Liter Mahlraum und mit Mahlkörpern vom Durchmesser kleiner als 1 mm betrieben werden, wobei deren Rührwerksumfangsgeschwindigkeit über 12 m/s beträgt. Durch die bauliche Ausführung wird sichergestellt, daß die hohe Mahlenergie auf das Mahlgut übertragen wird. Zur Ermittlung der geeigneten Mahlbedingungen sind Vorversuche notwendig. Die Mahlung wird vorzugsweise im wäßrigen Medium und im alkalischen pH-Bereich durchgeführt. Sie kann auch im wäßrigen Medium unter Zusatz von geringen Mengen eines organischen Lösemittels, vorzugsweise bis zu 10 Gew.-%, bezogen auf das gesamte Mahlgut, in homogener Mischung durchgeführt werden. Es ist auch möglich, die Mahlung in organischem Medium durchzuführen.

Die Pigmentkonzentration im Mahlgut ist abhängig von der Rheologie der Suspension und beträgt zweckmäßigerweise höchstens 30 Gew.-%, vorzugsweise 5 bis 30 Gew.-%, insbesondere 5 bis 20 Gew.-%, der Mahlgutsuspension.
Als anorganische Basen kommen Natronlauge, Kalilauge, Soda, Kaliumcarbonat, Calciumhydroxid und Ammoniak in Betracht. Auch Mischungen der genannten Basen können verwendet werden.

Das Mahlgut kann außer der flüssigen Phase und dem Rohpigment Pigmentdispergatoren, kationische, anionische oder nichtionische Tenside, Entschäumer und Zuschlagstoffe enthalten.

Die Mahlung wird bei Temperaturen im Bereich von 0 bis 100 °C, zweckmäßig bei einer Temperatur zwischen 10 und 60 °C, vorzugsweise bei 20 bis 50 °C, durchgeführt.

Die Mahldauer ist abhängig von den Feinheitsanforderungen für das jeweilige Anwendungsgebiet, beispielsweise das Lack-, Druck- oder Kunststoffgebiet. Die Verweilzeit des Mahlguts in der Rührwerkskugelmühle liegt, je nach geforderter Feinheit, im allgemeinen zwischen 5 und 150 Minuten. Zweckmäßig erweist sich eine Dauer von 5 bis 45 Minuten, vorzugsweise 10 bis 30 Minuten. Während der Mahlung bleibt die Phase der eingesetzten Rohpigmente erhalten. Nach der Mahlung liegen die Rohpigmente in den Suspensionen als Pigmente oder Präpigmente vor.

Die nach der Hochtemperaturhydrolyse oder nach der Feinverteilung vorliegenden Präpigmente werden in wäßriger Suspension, gegebenenfalls nach Zugabe von organischen Lösemitteln, einer Finishbehandlung unterzogen. Die für die Durchführung der Finishbehandlung einzuhaltenden Bedingungen sind in hohem Maße von den angestrebten Eigenschaften der Pigmente abhängig und werden jeweils daraufhin ausgerichtet. Normalerweise wird die Suspension der Präpigmente in dem betreffenden Milieu bei einer Temperatur im Bereich zwischen 50 und 200 °C, gegebenenfalls unter erhöhtem Druck, 1 bis 24 Stunden lang behandelt. Im allgemeinen wird dafür die nach der Naßmahlung erhaltene Suspension ohne Zwischenisolierung des Mahlguts eingesetzt. Die zugefügte Lösemittelmenge kann hierbei innerhalb weiter Grenzen schwanken. Bevorzugt verwendet man die gleiche bis zur 5fachen Gewichtsmenge an Lösemittel, bezogen auf das Gewicht der Präpigmente. Die thermische Behandlung im wäßrigen, wäßrig-organischen oder organischen Medium erfolgt vorzugsweise 1 bis 6 Stunden bei 50 bis 150 °C. Nach beendetem Finish können die dafür gebrauchten Lösemittel wieder destillativ zurückgewonnen und erneut eingesetzt werden. Unter Ausnutzung der auf diese Weise zur Verfügung stehenden Variationsmöglichkeiten lassen sich je nach Verwendungszweck die nach dem erfindungsgemäßen Verfahren anfallenden Präpigmente in eine deckendere oder transparentere Form oder in eine andere Phase überführen, was über die Art des gewählten Lösemittels, dessen Konzentration, die Auswahl der Temperatur und die Dauer der Finishbehandlung gesteuert werden kann.

Zur Erzielung bestimmter coloristischer Effekte kann vor oder nach dem Finish und zweckmäßigerweise nach der Abtrennung des Lösemittels eine Behandlung mit Peroxodisulfaten durchgeführt werden, bevorzugt bei 60 bis 100°C. Bezogen auf das Pigment, werden hierbei 1 bis 20 Gew.-% Peroxodisulfat zugesetzt. Das Peroxodisulfat kann in fester Form oder als wäßrig-alkalische Lösung zugesetzt werden. Die durch die Oxidation mit Peroxodisulfat verbrauchte Alkalimenge wird durch Alkalizusatz vor oder während der Oxidation kompensiert.
Für diese Oxidation kommen Natrium-, Kalium- oder Ammoniumperoxodisulfat in Betracht.

Oberflächenaktive Mittel, die bei dem erfindungsgemäßen Verfahren zur Anwendung kommen, sind beispielsweise kationische, anionische oder nichtionische Tenside, vorzugsweise Fettsäuretauride, Fettsäuresarkoside, Fettalkoholpolyglykolether, Fettalkoholpolyglykolester, Alkylpolyglykolethersulfate, Alkylphenolpolyglykolether, Alkansulfonsäuren sowie ihre Salze, Alkylphenylsulfonsäuren sowie ihre Salze und Alkylphenolpolyglykolethersulfate.

Als Pigmentdispergatoren werden bei dem erfindungsgemäßen Verfahren bevorzugt Verbindungen der allgemeinen Formel (II)

P ― Xm (II)

eingesetzt, in der
P für einen m-wertigen Rest eines linearen Chinacridons der allgemeinen Formel (I) steht, in dem R¹ und R² gleich sind und Wasserstoffatome oder Methylgruppen darstellen,
X eine Gruppe der Formel (III)

   -COOM (III)

   oder eine Gruppe der Formel (IV)

   -SO₃M (IV)

   darstellt, worin
M das Wasserstoffion H⁺ oder das Äquivalent M^{r+}/r eines r-wertigen Metallkations bezeichnet, wobei r für den betreffenden Fall dann übereinstimmend eine der Zahlen 1, 2 oder 3 ist, wie z.B. Li¹⁺, Na¹⁺, K¹⁺, Mg²⁺, Ca²⁺, Sr²⁺, Ba²⁺, Mn²⁺, Cu²⁺, Ni²⁺, Cd²⁺, Co²⁺, Zn²⁺, Fe²⁺, Al³⁺, Cr³⁺ oder Fe³⁺; oder ein Ammoniumion mit der Struktur N⁺R³R⁴R⁵R⁶ ist,
   wobei die Substituenten R³, R⁴, R⁵ und R⁶ unabhängig voneinander jeweils Wasserstoffatome, C₁-C₃₀-Alkyl-, C₂-C₃₀-Alkenyl- oder C₅-C₃₀-Cycloalkylgruppen, die durch Hydroxy-, Di-(C₁-C₄-alkyl)amino-, Carboxy- oder Carboxamidgruppen substituiert sein können, bedeuten,
   oder
X eine Gruppe der Formel (V) 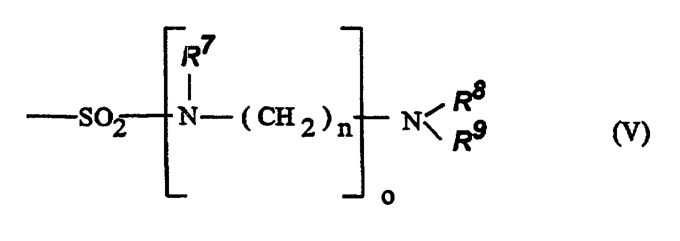 darstellt, worin R⁸ und R⁹ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁸ und R⁹ gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel; R⁷ ein Wasserstoffatom oder eine C₁-C₄-Alkylgruppe ist, n eine Zahl von 1 bis 6, o die Zahl 0 oder 1;
   oder
X eine Gruppe der Formel (VI) 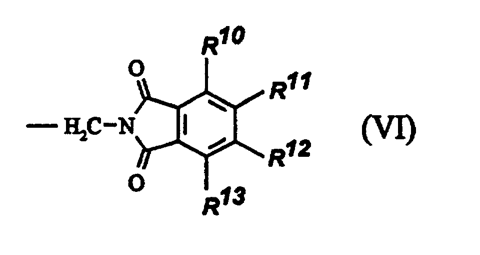 darstellt, wobei R¹⁰, R¹² und R¹³ ein Wasserstoff-, Fluor-, Chlor- oder Bromatom ist, und R¹¹ ein Wasserstoff-, Fluor, Chlor- oder Bromatom ist oder eine Nitro-, C₁-C₅-Alkyl-, C₁-C₆-Alkoxy- oder Benzoylaminogruppe bedeutet;
und m eine Zahl von 1 bis 4 ist.

Bevorzugt sind Pigmentdispergatoren mit der allgemeinen Formel (II), worin P den Rest des unsubstituierten linearen Chinacridons und X die Phthalimidomethylengruppe oder die Sulfonamidgruppe bedeutet. Es ist zweckmäßig, pro Gewichtseinheit Pigment, Präpigment oder Rohpigment 0,1 bis 20 Gew.-%, vorzugsweise 3 bis 10 Gew.-%, Pigmentdispergator zuzugeben.

Als organische Lösemittel kommen beispielsweise in Frage: Alicyclische Kohlenwasserstoffe wie z.B. Cyclohexan; C₁-C₈-Alkanole und alicyclische Alkohole, wie z.B. Methanol, Ethanol, n- oder Isopropanol, n- oder Isobutanol, tert. Butanol, Pentanole, Hexanole, Cyclohexanol; C₁-C₅-Dialkyl- oder cyclische Ketone wie z.B. Aceton, Diethylketon, Methylisobutylketon, Methylethylketon oder Cyclohexanon; Ether und Glykolether wie z.B. der Monomethyl- oder Monoethylether des Ethylen- und Propylenglykols, Butylglykol, Ethyldiglykol oder Methoxybutanol; aromatische Kohlenwasserstoffe wie z.B. Toluol, Xylole oder Ethylbenzol, cyclische Ether wie z.B. Tetrahydrofuran, aromatische Chlorkohlenwasserstoffe wie z.B. Chlorbenzol, o-Dichlorbenzol, 1,2,4-Trichlorbenzol oder Brombenzol; substituierte Aromaten wie z.B. Benzoesäure, Nitrobenzol oder Phenol; aliphatische Carbonsäureamide wie z.B. Formamid oder Dimethylformamid; cyclische Carbonsäureamide, wie z.B. N-Methylpyrrolidon; Carbonsäure-C₁-C₄-alkylester, wie z.B. Ameisensäurebutylester, Essigsäureethylester oder Propionsäurepropylester; Carbonsäure-C₁-C₄-glykolester, Phthalsäure- und Benzoesäure-C₁-C₄-alkylester wie z.B. Benzoesäureethylester; heterocyclische Basen wie z.B. Pyridin, Chinolin, Morpholin oder Picolin; sowie Dimethylsulfoxid und Sulfolan.

Bevorzugte organische Lösemittel sind Alkanole, insbesondere Ethanol, Propanole, Butanole und Pentanole; aliphatische Carbonsäureamide, wie Formamid oder Dimethylformamid; cyclische Carbonsäureamide, insbesondere N-Methylpyrrolidon; aromatische Kohlenwasserstoffe wie z.B. Toluol, Xylole oder Ethylbenzol; aromatische Chlorkohlenwasserstoffe wie z.B. Chlorbenzol oder o-Dichlorbenzol.

Die Herstellung von Pigmenten nach dem erfindungsgemäßen Verfahren hat sich als besonders wirtschaftlich sowie umweltfreundlich erwiesen, weil bei der Hochtemperaturhydrolyse die Hydrolyseprodukte direkt als Pigmente erhalten werden können, oder es werden grobkristalline Rohpigmente erhalten, die durch mechanische Feinverteilungsverfahren in Abwesenheit von Lösemitteln in die Pigmentform überführt werden können. Dadurch entfällt im Falle der unsubstituierten linearen Chinacridonpigmente der β-Phase eine zusätzliche Stufe zur Phasenumwandlung in Gegenwart von großen Mengen Alkali und Lösemitteln.

Bei dem erfindungsgemäßen Verfahren werden nur geringe Mengen an Chemikalien und Lösemitteln eingesetzt, welche anschließend weiterverarbeitet oder wieder vollständig regeneriert werden können. Somit treten keine Entsorgungsprobleme auf. Bei der Naßmahlung der Rohpigmente tritt keine Verschmutzung der Luft aufgrund von Staubentwicklung auf.

Es war überraschend und nicht vorhersehbar, daß durch Hochtemperaturhydrolyse der Ringschlußgemische im Falle des unsubstituierten linearen Chinacridonrohpigments direkt die β-Phase erhalten wird, während nach den Angaben der EP-A-0 682 090 nur mit wasserverdünnbaren Lösemitteln, gegebenenfalls unter Zusatz von geringen Mengen Wasser, Pigmente in der β-Phase erhalten werden können. Nach den dort gemachten Angaben werden bereits bei einem Gehalt von 50 Gew.-% Wasser im Lösemittel an Stelle der reinen β-Phase Phasengemische erhalten. Die nach der Hochtemperaturhydrolyse erhaltenen Pigmente, Pigmentzubereitungen und Mischkristallpigmente besitzen coloristische und rheologische Eigenschaften, die mit den bei niedriger Hydrolysetemperatur hergestellten Pigmenten nicht erreicht werden können.

Die nach der vorliegenden Erfindung erhältlichen Pigmente zeichnen sich aus durch ihre hervorragenden coloristischen und rheologischen Eigenschaften, insbesondere durch eine hohe Flockungsstabilität, eine leichte Dispergierbarkeit, ein gutes Glanzverhalten und eine hohe Farbstärke.

Die erfindungsgemäß hergestellten Pigmente lassen sich zum Pigmentieren von hochmolekularen organischen Materialien natürlicher oder synthetischer Herkunft einsetzen.
Hochmolekulare organische Materialien, die mit den genannten Pigmenten pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Verschnitten, Anstrichstoffen oder Druckfarben vorliegen. Je nach Verwendungszweck erweist es sich als vorteilhaft, die erfindungsgemäß erhaltenen Pigmente als Verschnitte oder in Form von Präparationen oder Dispersionen zu benutzen. Bezogen auf das zu pigmentierende, hochmolekulare organische Material setzt man die erfindungsgemäßen Pigmente in einer Menge von vorzugsweise 0,1 bis 10 % ein.

Zur Beurteilung der Eigenschaften der nach der Erfindung hergestellten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat und eines Melaminharzes sowie ein wäßriger Lack auf Polyurethanbasis (PUR) ausgewählt.

Zur Beurteilung der Eigenschaften der nach der Erfindung erzeugten Pigmente auf dem Kunststoffsektor wurde aus der Vielzahl der bekannten Kunststoffe Weichpolyvinylchlorid (PVC) und Polyolefin (PO) ausgewählt.

Zur Beurteilung der Eigenschaften der nach der Erfindung erzeugten Pigmente auf dem Drucksektor wurden aus der Vielzahl der bekannten Drucksysteme ein Tiefdrucksystem auf Nitrocellulosebasis (NC-Druck) ausgewählt.
Die Bestimmung der Farbstärke und des Farbtons erfolgte nach DIN 55986.
Die Rheologie des Mahlguts nach der Dispergierung (Millbase-Rheologie) wurde anhand der folgenden fünfstufigen Skala bewertet:
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

Die erfindungsgemäß hergestellten Pigmente sind geeignet als Farbmittel in elektrophotographischen Tonern und Entwicklern, wie z.B. Ein- oder Zweikomponentenpulvertonern (auch Ein- oder Zweikomponenten-Entwickler genannt), Magnettonern, Flüssigtonern,Polymerisationstonern sowie weiteren Spezialtonern (L.B. Schein, "Electrophotography and Development Physics"; Springer Series in Electrophysics 14, Springer Verlag, 2nd edition, 1992). Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein zugesetzt bekommen können.

Desweiteren sind die erfindungsgemäß hergestellten Pigmente geeignet als Farbmittel in Pulver und Pulverlacken, insbesondere in triboelektrisch oder elektrokinetisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating" Research Studies Press, John Wiley & Sons, 1984).
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Pigmente geeignet als Farbmittel in Ink-Jet Tinten auf wäßriger und nichtwäßriger Basis, sowie in solchen Tinten, die nach dem Hot-melt Verfahren arbeiten.

Die Bestimmung der Kristallphase der Rohpigmente, Präpigmente, Pigmente, Mischkristallpigmente und Pigmentzubereitungen erfolgte durch Röntgenspektroskopie (CuK_{α}-Strahlung).

Im vorangehenden Text und in den nachfolgenden Beispielen beziehen sich Teile jeweils auf Gewichtsteile und Prozente jeweils auf Gewichtsprozente.

Unter Chinacridonpigmenten der α-Phase werden solche mit den Beugungswinkeln 6,12; 12,36; 13,94; 25,59 und 27,94 [2 Theta] verstanden. Unter Chinacridonpigmenten der β-Phase werden solche mit den Beugungswinkeln 5,65; 11,64; 15,89 und 26,99 [2 Theta] verstanden. Abbildungen dieser Röntgenbeugungsdiagramme sind in EP-A-0 655 485 gezeigt. Unter Chinacridonpigmenten der γ-Phase werden solche mit den Beugungswinkeln 6,35; 13,62; 23,69; 26,25 [2 Theta] verstanden.

### Beispiel 1

In ein Druckgefäß werden 705,9 Teile Polyphosphorsäure, die 84,3 % P₂O₅ enthält, eindosiert. Danach werden 141,2 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 1700 Teilen Orthophosphorsäure (13,9 %ig in Wasser) bei 140 °C unter dem sich in dem geschlossenen Gefäß einstellenden Druck hydrolysiert. Dabei steigt die Temperatur auf 170 °C an. Es wird 0,5 Stunden bei 170 °C gerührt. Danach wird auf 60 °C abgekühlt, das erhaltene Pigment abgesaugt, mit Wasser neutral gewaschen und bei 80 °C getrocknet.
Man erhält 126,5 Teile Pigment (C.I. Pigment Violet 19, β-Phase, mit Spuren α-Phase. Wird das Reaktionsgemisch bei einer Temperatur unterhalb von 110°C hydrolysiert, so wird ein Präpigment erhalten, das überwiegend in der α-Phase vorliegt.).

In PVC und in Polyolefin werden farbstarke Färbungen erhalten. Die Dispergierbarkeit ist sehr gut und die Ausblutechtheit ist einwandfrei. Im AM-Lack werden deckende und farbstarke Lackierungen erhalten. Die Rheologie wird mit 5 bewertet und die Viskosität beträgt 4,0 s.

### Beispiel 2

In ein Druckgefäß werden 708,1 Teile Polyphosphorsäure, die 83,5 % P₂O₅ enthält, eindosiert. Danach werden 141,6 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 1700 Teilen Phosphorsäure (13,9 %ig) bei 140 °C unter Druck hydrolysiert. Dabei steigt die Temperatur auf 170 °C an. Es wird auf 155 °C abgekühlt und 0,5 Stunden bei 155 °C gerührt. Danach wird auf 60 °C abgekühlt, das Pigment abgesaugt, mit Wasser neutral gewaschen und bei 80 °C getrocknet. Man erhält 126,9 Teile Pigment (C.I. Pigment Violet 19, β-Phase, mit Spuren α-Phase). Im AM-Lack werden deckende und farbstarke Lackierungen erhalten. Die Rheologie wird mit 4-5 bewertet und die Viskosität beträgt 3,9 s.

### Beispiel 3

In ein Druckgefäß werden 375 Teile Polyphosphorsäuremethylester, der 84,0 % P₂O₅ enthält, eindosiert. Danach werden 75 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2250 Teilen Phosphorsäure (30 %ig) bei 140 °C unter dem sich in dem geschlossenen Gefäß einstellenden Druck hydrolysiert. Dabei steigt die Temperatur auf 155 °C an. Es wird 0,5 Stunden bei 155 °C gerührt. Danach wird auf 60 °C abgekühlt, das Pigment abgesaugt, mit Wasser neutral gewaschen und bei 80 °C getrocknet.
Man erhält 67,2 Teile Pigment (C.I. Pigment Violet 19, β-Phase, mit Spuren α-Phase), das im AM-Lack transparente und farbstarke Lackierungen liefert. Die Rheologie wird mit 3 bewertet und die Viskosität beträgt 4,2 s.

### Beispiel 4

In ein Druckgefäß werden 375 Teile Polyphosphorsäure, die 85,0 % P₂O₅ enthält, eindosiert. Danach werden 75,0 Teile 2,5-Dianilinoterephthalsäure und 4,2 Teile Pigmentdispergator der Formel (II) unter Rühren bei 80 bis 90 °C eingetragen und 1 Stunde auf 125 °C erhitzt, wobei der Ringschluß zum Chinacridon erfolgt. In dieser Formel (II) bedeutet P den Rest des linearen unsubstituierten Chinacridons und X die Phthalimidomethylengruppe (VI), in der R¹⁰, R¹¹, R¹² und R¹³ jeweils ein Wasserstoffatom und m die Zahl 1,7 ist. Anschließend wird das Reaktionsgemisch in ein zweites Druckgefäß eindosiert und unter Rühren mit 2250 Teilen Phosphorsäure (30 %ig) bei 140 °C unter dem sich in dem geschlossenen Gefäß einstellenden Druck hydrolysiert. Dabei steigt die Temperatur auf 155 °C an. Es wird 0,5 Stunden bei 155 °C gerührt. Danach wird auf 60 °C abgekühlt, die Pigmentzubereitung abgesaugt, mit Wasser neutral gewaschen und bei 80 °C getrocknet.
Man erhält 71,4 Teile Pigmentzubereitung (C.I. Pigment Violet 19, β-Phase, mit Spuren α-Phase), die im AM-Lack transparente und farbstarke Lackierungen liefert. Die Rheologie wird mit 5 bewertet und die Viskosität beträgt 3,9 s.

### Beispiel 5

In ein Druckgefäß werden 375 Teile Polyphosphorsäure, die 85,0 % P₂O₅ enthält, eindosiert. Danach werden 75,0 Teile 2,5-Dianilinoterephthalsäure und 4,2 Teile Pigmentdispergator der Formel (II) unter Rühren bei 80 bis 90 °C eingetragen und 1 Stunde auf 125 °C erhitzt, wobei der IRingschluß zum Chinacridon erfolgt. In dieser Formel (II) bedeutet P den Rest des linearen unsubstituierten Chinacridons und X die Phthalimidomethylengruppe (VI), in der R¹⁰, R¹¹, R¹² und R¹³ jeweils ein Wasserstoffatom und m die Zahl 1,7 ist. Anschließend wird das Reaktionsgemisch in ein zweites Druckgefäß eindosiert und unter Rühren mit 2250 Teilen Phosphorsäure (30 %ig) bei 140 °C unter dem sich in dem geschlossenen Gefäß einstellenden Druck hydrolysiert. Dabei steigt die Temperatur auf 155 °C an. Es wird 0,5 Stunden bei 155 °C gerührt. Danach wird auf 60 °C abgekühlt, die Pigmentzubereitung abgesaugt, mit Wasser neutral gewaschen und bei 80 °C getrocknet.
Man erhält 71,4 Teile Pigmentzubereitung (C.I. Pigment Violet 19, β-Phase, mit Spuren α-Phase).
28,5 Teile Pigmentzubereitung werden mit 1,5 Teilen Pigmentdispergator der Formel (II) mechanisch gemischt. In dieser Formel (II) bedeutet P Rest den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist.
Man erhält eine Pigmentzubereitung, die im AM-Lack transparente und farbstarke Lackierungen erhalten. Die Rheologie wird mit 5 bewertet, die Viskosität beträgt 3,9 s und die Glanzmessung ergibt den Wert 79.

### Beispiel 6

In ein Druckgefäß werden 250 Teile Polyphosphorsäure, die 85,0 % P₂O₅ enthält, eindosiert. Danach werden 50 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in einem Statischen Mischer Typ^{(R)} Kenics KMR Durchmesser 14,6 mm (Lieferant: H. Ott, Neckargmünd) mit einem Durchsatz von 120 Volumenteilen pro Stunde mit 20 %iger Phosphorsäure, die mit einem Durchsatz von 480 Volumenteilen pro Stunde zudosiert wird, bei 140 °C unter Druck hydrolysiert. Dabei steigt die Temperatur auf 166 °C an. Das Hydrolysegemisch wird in einem Druckgefäß auf 100 °C abgekühlt und 1 Stunde bei dieser Temperatur gerührt. Danach wird auf 60 °C abgekühlt, das Pigment abgesaugt, mit Wasser neutral gewaschen und bei 80 °C getrocknet. Man erhält 44,3 Teile Pigment (C.I. Pigment Violet 19, β-Phase, mit Spuren α-Phase). Im AM-Lack werden transparente und farbstarke Lackierungen erhalten. Die Rheologie wird mit 5 bewertet und die Viskosität beträgt 3,9 s.

### Beispiel 7

In ein Druckgefäß werden 375 Teile Polyphosphorsäure, die 85,0 % P₂O₅ enthält, eindosiert. Danach werden 75 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2250 Teilen Wasser von 140 °C unter Druck hydrolysiert. Dabei steigt die Temperatur auf 155 °C an. Es wird 1 Stunde bei 155 °C gerührt. Danach wird auf 60 °C abgekühlt, das Rohpigment abgesaugt, mit Wasser neutral gewaschen und bei 80 °C getrocknet.
Man erhält 67,2 Teile grobkristallines Rohpigment (Rohpigment Violet 19, β-Phase). In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 77 Teilen Natronlauge, 1 %ig, 6,3 Teilen grobkristallinem Rohpigment (β-Phase) und 0,32 Teilen Pigmentdispergator der Formel (II) eindosiert. In dieser Formel (II) bedeutet P Rest den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Es wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80 °C getrocknet.
Man erhält 6,3 Teile Pigmentzubereitung (C.I. Pigment Violet 19, β-Phase), die im AM-Lack transparente und farbstarke Lackierungen liefert. Die Rheologie wird mit 5 bewertet, die Viskosität beträgt 3,8 s und die Glanzmessung ergibt den Wert 79.

### Beispiel 8

In ein Druckgefäß werden 772,3 Teile Polyphosphorsäure, die 85,0 % P₂O₅ enthält, eindosiert. Danach werden 154,5 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2120 Teilen Phosphorsäure (13,9 %ig) von 140 °C unter Druck hydrolysiert. Dabei steigt die Temperatur auf 172 °C an. Es wird auf 155 °C abgekühlt und 0,5 Stunden bei dieser Temperatur gerührt. Danach wird auf 60 °C abgekühlt, das Rohpigment abgesaugt, mit Wasser neutral gewaschen und bei 80 °C getrocknet.
Man erhält 138,4 Teile grobkristallines Rohpigment (Rohpigment Violet 19, β-Phase).
In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 77 Teilen Natronlauge, 1 %ig, und 6,4 Teilen grobkristallinem Rohpigment (β-Phase) eindosiert. Es wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt und mit Wasser gewaschen.
Man erhält 28,4 Teile Präpigment-Preßkuchen, 22,5%ig, (β-Phase).
Zur Finishoperation wird der Preßkuchen in 41,5 Teile Wasser eingetragen, 3,3 Teile Isobutanol und 0,65 Teile Ätznatron, 98 %ig hinzugefügt. Es wird zum Sieden erhitzt, 3 Stunden bei Siedetemperatur gerührt und anschließend das Isobutanol bis 100 °C am Übergang abdestilliert. Nach dem Abkühlen auf 60 °C wird das Pigment abgesaugt, mit Wasser neutral gewaschen und bei 80 °C getrocknet. Man erhält 6,1 Teile Pigment (C.I. Pigment Violet 19, β-Phase).

In PVC und in Polyolefin werden farbstarke Färbungen erhalten. Die Dispergierbarkeit ist sehr gut und die Ausblutechtheit ist einwandfrei.

### Beispiel 9

In ein Druckgefäß werden 772,3 Teile Polyphosphorsäure, die 85,0 % P₂O₅ enthält, eindosiert. Danach werden 154,5 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2120 Teilen Phosphorsäure, 13,9 %ig, bei 140 °C unter Druck hydrolysiert. Dabei steigt die Temperatur auf 172 °C an. Es wird auf 150 °C abgekühlt und 0,5 Stunden bei dieser Temperatur gerührt. Danach wird auf 60 °C abgekühlt, das Rohpigment abgesaugt, mit Wasser neutral gewaschen und bei 80 °C getrocknet.
Man erhält 138,4 Teile grobkristallines Rohpigment der β-Phase.
Bestimmung des Reingehalts an Chinacridon: 10 Teile des wie vorstehend beschrieben hergestellten Rohpigments werden in 200 Teile konzentrierte Schwefelsäure bei <10 °C eingetragen und gelöst. Anschließend läßt man innerhalb 1 Stunde 56 Teile Wasser zutropfen. Danach wird 3 Stunden auf 80 °C geheizt. Man läßt auf 25 °C abkühlen und saugt den Niederschlag ab, wäscht diesen mit 75 %iger Schwefelsäure bis zum klaren Ablauf, wäscht anschließend neutral und trocknet bei 80 °C.
Man erhält 9,75 Teile reines Chinacridon. Das erhaltene Chinacridon ist damit 97,5 %ig.
In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 77 Teilen Natronlauge, 1 %ig, 6,4 Teilen grobkristallinem Rohpigment (β-Phase) und 0,32 Teilen Pigmentdispergator der Formel (II) eindosiert. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist. Es wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80 °C getrocknet.
Man erhält 6,5 Teile Pigmentzubereitung (C.I. Pigment Violet 19, β-Phase).
Im AM-Lack werden transparente und farbstarke Lackierungen erhalten. Die Rheologie wird mit 5 bewertet, die Viskosität beträgt 3,0 s und die Glanzmessung ergibt den Wert 79.
Im PE-Lack werden transparente und farbstarke Lackierungen erhalten. Die Rheologie wird mit 3 bewertet und die Viskosität beträgt 2,9 s. Im NC-Druck werden transparente und farbstarke Ducke mit hohem Glanz erhalten.

### Beispiel 10

In ein Druckgefäß werden 424 Teile Polyphosphorsäure, die 85,0 % P₂O₅ enthält, eindosiert. Danach werden 84,8 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2250 Teilen Phosphorsäure, 30 %ig, von 140 °C unter Druck hydrolysiert. Dabei steigt die Temperatur auf 157 °C an. Es wird auf 145 °C abgekühlt und 5 Stunden bei 145 °C gerührt. Danach wird auf 60 °C abgekühlt, das Rohpigment abgesaugt, mit Wasser neutral gewaschen und bei 80 °C getrocknet.
Man erhält 76,0 Teile grobkristallines Rohpigment der β-Phase.
In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 100 Teilen Natronlauge, 1 %ig, 6,4 Teilen grobkristallinem Rohpigment (β-Phase) und 0,32 Teilen Pigmentdispergator der Formel (II) eindosiert. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist. Es wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80 °C getrocknet.
Man erhält 6,0 Teile Pigmentzubereitung (C.I. Pigment Violet 19, β-Phase). Im AM-Lack werden transparente und farbstarke Lackierungen erhalten. Die Rheologie wird mit 5 bewertet und die Viskosität beträgt 3,0 s.

### Beispiel 11

In ein Druckgefäß werden 392,8 Teile Polyphosphorsäure, die 85,0 % P₂O₅ enthält, eindosiert. Danach werden 78,6 Teile 2,5-Dianilinoterephthalsäure und 4,2 Teile Pigmentdispergator der Formel (II) unter Rühren bei 80 bis 90 °C eingetragen und 1 Stunde auf 125 °C erhitzt, wobei der Ringschluß zum Chinacridon erfolgt. In dieser Formel (II) bedeutet P den Rest des linearen unsubstituierten Chinacridons und X die Sulfonsäuregruppe (IV), in der M ein Wasserstoffion und m die Zahl 1,7 ist. Anschließend wird das Reaktionsgemisch in ein zweites Druckgefäß eindosiert und unter Rühren mit 2250 Teilen Phosphorsäure, 30 %ig, bei 140 °C unter Druck hydrolysiert. Dabei steigt die Temperatur auf 155 °C an. Es wird 0,5 Stunden bei 155 °C gerührt. Danach wird auf 60 °C abgekühlt, die Präpigmentzubereitung abgesaugt und mit Wasser gewaschen.
Man erhält 351,2 Teile Präpigmentzubereitung (Preßkuchen, 20,1 %ig, β-Phase, mit Spuren α-Phase).
Zur Finishoperation werden 100 Teile Preßkuchen in 100 Teile Wasser eingetragen, 60 Teile Isobutanol 85 %ig und eine Lösung aus 0,67 Teilen Aluminiumsulfat x 18 H₂O und 10 Teilen Wasser hinzugefügt. Durch Zugabe von 1 Teil Schwefelsäure, 10 %ig, wird ein pH-Wert von 1 bis 2 eingestellt. Es wird zum Sieden erhitzt, 3 Stunden bei Siedetemperatur gerührt und anschließend das Isobutanol bis 100 °C am Übergang abdestilliert. Nach dem Abkühlen auf 60 °C wird die Pigmentzubereitung abgesaugt, mit Wasser neutral gewaschen und bei 80 °C getrocknet.
Man erhält 20,7 Teile Pigmentzubereitung (C.I. Pigment Violet 19, β-Phase). In dieser Pigmentzubereitung liegt der Pigmentdispergator der Formel (II) vor, in welcher P den Rest des linearen unsubstituierten Chinacridons bedeutet und X die Sulfonsäuregruppe (IV) darstellt, in der M ein Aluminiumion und m die Zahl 1,7 ist. Im AM-Lack werden farbstarke Lackierungen erhalten. Die Rheologie wird mit 5 bewertet. Die Viskosität beträgt 3,3".

### Beispiel 12

In ein Druckgefäß werden 392,8 Teile Polyphosphorsäure, die 85,0 % P₂O₅ enthält, eindosiert. Danach werden 78,6 Teile 2,5-Dianilinoterephthalsäure und 4,2 Teile Pigmentdispergator der Formel (II) unter Rühren bei 80 bis 90 °C eingetragen und 1 Stunde auf 125 °C erhitzt, wobei der Ringschluß zum Chinacridon erfolgt. In dieser Formel (II) bedeutet P den Rest des linearen unsubstituierten Chinacridons und X die Sulfonsäuregruppe (IV), in der M ein Wasserstoffion und m die Zahl 1,7 ist. Anschließend wird das Reaktionsgemisch in ein zweites Druckgefäß eindosiert und unter Rühren mit 2250 Teilen Phosphorsäure, 30 %ig, von 140 °C unter Druck hydrolysiert. Dabei steigt die Temperatur auf 155 °C an. Es wird 0,5 Stunden bei 155 °C gerührt. Danach wird auf 60 °C abgekühlt, die Präpigmentzubereitung abgesaugt, mit Wasser neutral gewaschen.
Man erhält 351,2 Teile 20,1 %igen Preßkuchen einer Präpigmentzubereitung β-Phase, mit Spuren α-Phase).
Zur Finishoperation werden 100 Teile dieses Preßkuchens in 100 Teile Wasser eingetragen, 60 Teile Isobutanol, 85 %ig, und eine Lösung aus 1,33 Teilen eines natürlichen Harzes, das überwiegend aus Abietylamin besteht, 1,33 Teilen Ameisensäure, 98 %ig, und 20 Teilen Wasser hinzugefügt. Es wird zum Sieden erhitzt, 3 Stunden bei Siedetemperatur gerührt und anschließend das Isobutanol bis 100 °C am Übergang abdestilliert. Nach dem Abkühlen auf 60 °C wird die Pigmentzubereitung abgesaugt, mit Wasser neutral gewaschen und bei 80 °C getrocknet.
Man erhält 21,5 Teile Pigmentzubereitung (C.I. Pigment Violet 19, β-Phase). In dieser Pigmentzubereitung liegt der Pigmentdispergator der Formel (II) vor, in welcher P Rest den Rest des linearen unsubstituierten Chinacridons bedeutet und X die Sulfonsäuregruppe (IV) darstellt, in der M eine cycloaliphatisch substituierte Ammoniumgruppe auf Basis eines natürlichen Harzes, das überwiegend aus Abietylamin besteht, bedeutet und m die Zahl 1,7 ist. Im AM-Lack werden farbstarke Lackierungen erhalten. Die Rheologie wird mit 5 bewertet. Die Viskosität beträgt 3,4".

### Beispiel 13

In ein Druckgefäß werden 383 Teile Polyphosphorsäure, die 85,0 % P₂O₅ enthält, eindosiert. Danach werden 76,6 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 2250 Teilen Phosphorsäure, 30 %ig, und 80 Teilen Isoamylalkohol bei 155 °C unter Druck hydrolysiert. Dabei steigt die Temperatur auf 170 °C an. Es wird auf 155 °C abgekühlt und 0,5 Stunden bei dieser Temperatur gerührt. Danach wird auf 90 °C abgekühlt und der Isoamylalkohol bis 100 °C am Übergang abdestilliert. Es wird auf 60 °C abgekühlt, das Rohpigment abgesaugt, mit Wasser neutral gewaschen und bei 80 °C getrocknet.
Man erhält 68,7 Teile grobkristallines Rohpigment der β-Phase.
In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 100 Teilen Wasser, 6,4 Teilen grobkristallinem Rohpigment (β-Phase) und 0,32 Teilen Pigmentdispergator der Formel (II) eindosiert. In dieser Formel (I) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Es wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80 °C getrocknet.
Man erhält 5,9 Teile Pigmentzubereitung (C.I. Pigment Violet 19, β-Phase).
Im AM-Lack werden farbstarke Lackierungen erhalten. Die Rheologie wird mit 5 bewertet und die Viskosität beträgt 2,8".

### Beispiel 14

In ein Druckgefäß werden 385 Teile Polyphosphorsäure, die 85,0 % P₂O₅ enthält, eindosiert. Danach werden 77,0 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Lösung aus 2250 Teilen Phosphorsäure, 30 %ig, und 2,7 Teilen Alkansulfonat, 65 %ig in Wasser, bei 140 °C unter Druck hydrolysiert. Dabei steigt die Temperatur auf 155 °C an. Es wird 0,5 Stunden bei 155 °C gerührt. Danach wird auf 60 °C abgekühlt, das Rohpigment abgesaugt, mit Wasser neutral gewaschen und bei 80 °C getrocknet.
Man erhält 69,0 Teile grobkristallines oberflächenbehandeltes Rohpigment der β-Phase).
In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 95 Teilen Wasser, 5 Teilen Isobutanol, 100 %ig und 6,4 Teilen grobkristallinem Rohpigment (β-Phase) eindosiert. Es wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült. Aus den vereinigten Mahlgutsuspensionen wird das Isobutanol bis 100 °C am Übergang abdestilliert. Es wird auf 60 °C abgekühlt, das oberflächenbehandelte Pigment abgesaugt, mit Wasser gewaschen und bei 80 °C getrocknet.
Man erhält 6,3 Teile oberflächenbehandeltes Pigment (C.I. Pigment Violet 19, β-Phase). Im AM-Lack werden transparente farbstarke Lackierungen erhalten. Die Rheologie wird mit 5 bewertet und die Viskosität beträgt 4,4".

### Beispiel 15

In ein Druckgefäß werden 427,5 Teile Polyphosphorsäure, die 85,0 % P₂O₅ enthält, eindosiert. Danach werden 85,5 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2250 Teilen Phosphorsäure, 30 %ig, von 140 °C unter Druck hydrolysiert. Dabei steigt die Temperatur auf 155 °C an. Es wird 0,5 Stunden bei dieser Temperatur gerührt. Danach wird auf 60 °C abgekühlt, das Rohpigment abgesaugt, mit Wasser neutral gewaschen und bei 80 °C getrocknet.
Man erhält 398,2 Teile Rohpigment-Preßkuchen, 19,2 %ig, der β-Phase.
In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 65 Teilen Wasser, 0,9 Teilen Ätznatron, 98 %ig, und 33,3 Teilen grobkristallinem Rohpigment-Preßkuchen, 19,2 %ig (β-Phase), eindosiert. Es wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt.
Man erhält 96 Teile Präpigment als Mahlgutsuspension, 6,4 %ig, der β-Phase. Zur Finishbehandlung werden zu dieser Mahlgutsuspension 6,0 Teile n-Butanol hinzugefügt. Es wird zum Sieden erhitzt, 3 Stunden bei Siedetemperatur gerührt und anschließend das n-Butanol bis 100 °C am Übergang abdestilliert. Nach dem Abkühlen auf 60 °C wird das Pigment abgesaugt, mit Wasser neutral gewaschen und bei 80 °C getrocknet.
Man erhält 5,2 Teile Pigment (C.I. Pigment Violet 19, β-Phase). Im PUR-Lack werden transparente und farbstarke Lackierungen erhalten.

### Beispiel 16

In ein Druckgefäß werden 772,3 Teile Polyphosphorsäure, die 83,5 % P₂O₅ enthält, eindosiert. Danach werden 154,5 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2120 Teilen Phosphorsäure, 13,9 %ig, bei 140 °C unter Druck hydrolysiert. Dabei steigt die Temperatur auf 172 °C an. Es wird auf 155 °C abgekühlt und 0,5 Stunden bei dieser Temperatur gerührt. Danach wird auf 60 °C abgekühlt, das Rohpigment abgesaugt, mit Wasser neutral gewaschen und bei 80 °C getrocknet.
Man erhält 138,4 Teile grobkristallines Rohpigment der β-Phase.
in einen Stahlbehälter, der mit 3370 Teilen Stahlkugeln vom Durchmesser 10 mm als Mahlkörper zu 55 Vol.-% gefüllt ist, wird eine Mischung bestehend aus 25,0 Teilen grobkristallinem Rohpigment (β-Phase) und 0,75 Teilen Xylol eingefüllt. Es wird 48 Stunden lang bei 75 % der kritischen Drehzahl auf einem Rolltisch gemahlen. Anschließend wird das Mahlgut von den Mahlkörpern abgesiebt. Das Mahlgut wird mit 220 Teilen Wasser angerührt und das Xylol bis 100 °C am Übergang abdestilliert. Es wird auf 60 °C abgekühlt, das Pigment abgesaugt, mit Wasser gewaschen und bei 80 °C getrocknet.
Man erhält 21,3 Teile Pigment (C.I. Pigment Violet 19, β-Phase). Im AM-Lack werden deckende Lackierungen erhalten.

### Beispiel 17

In ein Druckgefäß werden 337,6 Teile Polyphosphorsäure, die 81,3 % P₂O₅ enthält, eindosiert. Danach werden 67,5 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2250 Teilen Phosphorsäure, 30 %ig, von 130 °C unter Druck hydrolysiert. Dabei steigt die Temperatur auf 145 °C an. Es wird 0,5 Stunden bei 145 °C gerührt. Danach wird auf 60 °C abgekühlt, das Präpigment abgesaugt, mit Wasser neutral gewaschen und bei 80 °C getrocknet.
Man erhält 343,8 Teile Präpigment-Preßkuchen, 17,6 %ig, der Mischung aus α-und β-Phase. Wird das obige Reaktionsgemisch bei niedriger Temperatur hydrolysiert, so wird ein Präpigment erhalten, das in der α-Phase vorliegt.
Zur Finishoperation werden 170,5 Teile Präpigment-Preßkuchen in ein Rührgefäß eingefüllt. Danach werden 159,5 Teile Wasser, 3,0 Teile Natriumhydroxid, 98 %ig, und 90 Teile Isobutanol zugegeben. Es wird auf 150 °C unter Druck erhitzt und 5 Stunden bei dieser Temperatur gerührt. Danach wird auf 90 °C abgekühlt und das Isobutanol bis 100 °C am Übergang abdestilliert. Anschließend wird auf 90 °C abgekühlt und bei dieser Temperatur eine Lösung aus 8,0 Teilen Wasser und 0,44 Teilen Natriumperoxodisulfat zugesetzt. Es wird 1 Stunde bei 90 °C gerührt. Danach wird die Suspension auf 60 °C abgekühlt, das Pigment abgesaugt, mit Wasser neutral gewaschen und bei 80 °C getrocknet.
Man erhält 27,7 Teile Pigment (C.I. Pigment Violet 19, β-Phase). Im AM-Lack werden transparente und farbstarke Lackierungen erhalten. Die Rheologie wird mit 4-5 bewertet und die Viskosität beträgt 3,8". Durch den Zusatz der Natriumperoxodisulfatlösung liefert das Pigment im Purton tiefere und im Farbton blaustichigere Lackierungen als das gleiche, aber ohne den Zusatz der Natriumperoxodisulfatlösung hergestellte Pigment.

### Beispiel 18

In ein Druckgefäß werden 710 Teile Polyphosphorsäure, die 83,0 % P₂O₅ enthält, eindosiert. Danach werden 142 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 1700 Teilen Phosphorsäure, 13,9 %ig, bei 140 °C unter Druck hydrolysiert. Dabei steigt die Temperatur auf 170 °C an. Es wird auf 150 °C abgekühlt und 0,5 Stunden bei dieser Temperatur gerührt. Danach wird auf 60 °C abgekühlt, das Präpigment abgesaugt und mit Wasser neutral gewaschen.
Man erhält 649,9 Teile Präpigment-Preßkuchen, 19,6 %ig, der β-Phase, mit etwas α-Phase).
Zur Finishoperation werden 204,1 Teile Präpigment-Preßkuchen in ein Rührgefäß eingefüllt. Danach werden 345,2 Teile Wasser und 41,5 Teile Natronlauge 33 %ig zugegeben. Es wird auf 150 °C unter Druck erhitzt und 5 Stunden bei dieser Temperatur gerührt. Danach wird auf 90 °C abgekühlt, 36,5 Teile Ethanol 96,5 %ig zugegeben und 2 Stunden zum Sieden erhitzt.
Anschließend wird auf 60 °C abgekühlt und 8,2 Teile einer 10 %igen wäßrigen Alkylphenolpolyglykolethersulfatlösung zugegeben. Es wird 2 Stunden bei 60 °C gerührt. Danach wird durch Zugabe von 34,9 Teilen Salzsäure, 31 %ig, pH 2 eingestellt, 1 Stunde bei 60 °C gerührt, das oberflächenbehandelte Pigment abgesaugt, mit Wasser neutral gewaschen und bei 80 °C getrocknet.
Man erhält 34,7 Teile oberflächenbehandeltes Pigment (C.I. Pigment Violet 19, β-Phase). Im AM-Lack werden farbstarke Lackierungen erhalten. Die Rheologie wird mit 4-5 bewertet. Die Viskosität beträgt 3,8".

### Beispiel 19

In ein Druckgefäß werden 429 Teile Polyphosphorsäure, die 85,0 % P₂O₅ enthält, eindosiert. Danach werden 76,9 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2250 Teilen Phosphorsäure, 30 %ig, bei 110 °C unter Druck hydrolysiert. Dabei steigt die Temperatur auf 125 °C an. Es wird 0,5 Stunden bei 125 °C gerührt. Danach wird auf 60 °C abgekühlt, das Präpigment abgesaugt und mit Wasser neutral gewaschen.
Man erhält 395,8 Teile Präpigment-Preßkuchen, 19,4 %ig, α-Phase, mit kleinem β-Anteil.
Zur Finishbehandlung werden 51,5 Teile Präpigment-Preßkuchen, 19,4 %ig, in 200 Teile N-Methylpyrrolidon eingetragen und verrührt. Danach wird unter Abdestillieren von Wasser auf 125 °C geheizt und 2 Stunden bei dieser Temperatur gerührt. Anschließend wird auf 25 °C abgekühlt, das Pigment abgesaugt, mit Wasser N-methylpyrrolidonfrei gewaschen und bei 80 °C getrocknet.
Man erhält 9,45 Teile Pigment (C.I. Pigment Violet 19, γ-Phase). Im AM-Lack werden farbstarke Lackierungen erhalten. Die Rheologie wird mit 3-4 bewertet und die Viskosität beträgt 4,4".

### Beispiel 20

In ein Druckgefäß werden 367,3 Teile Polyphosphorsäure, die 85,0 % P₂O₅ enthält, eindosiert. Danach werden 73,5 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 2250 Teilen Phosphorsäure, 30 %ig, und 100 Teilen Xylol von 140 °C unter Druck hydrolysiert. Dabei steigt die Temperatur auf 155 °C an. Es wird 0,5 Stunden bei dieser Temperatur gerührt. Danach wird auf 90 °C abgekühlt und das Xylol bis 100 °C am Übergang abdestilliert. Es wird auf 60 °C abgekühlt, das Pigment abgesaugt, mit Wasser neutral gewaschen und bei 80 °C getrocknet. Man erhält 66,4 Teile Pigment (C.I. Pigment Red 122).
28,5 Teile Pigment werden mit 1,5 Teilen Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist.
Man erhält eine Pigmentzubereitung, die im AM-Lack sehr transparente und farbstarke Lackierungen erhalten. Die Rheologie wird mit 5 bewertet und die Viskosität beträgt 3,8 s.

### Beispiel 21

In ein Druckgefäß werden 369,5 Teile Polyphosphorsäure, die 85,0 % P₂O₅ enthält, eindosiert. Danach werden 18,6 Teile 2,5-Dianilinoterephthalsäure und 55,3 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 2250 Teilen Phosphorsäure, 30 %ig, und 100 Teilen Chlorbenzol bei 140 °C unter Druck hydrolysiert. Dabei steigt die Temperatur auf 155 °C an. Es wird 0,5 Stunden bei 155 °C gerührt. Danach wird auf 90 °C abgekühlt und das Chlorbenzol bis 100 °C am Übergang abdestilliert. Es wird auf 60 °C abgekühlt, das Mischkristallpigment abgesaugt, mit Wasser neutral gewaschen und bei 80 °C getrocknet.
Man erhält 66,7 Teile Mischkristallpigment. (Es liegt das Spektrum des Mischkristallpigments vor: 5,43; 10,96; 13,99; 27,16 [2 Theta]. Die typischen Reflexe des unsubstituierten Chinacridons sind nicht nachweisbar. Im AM-Lack werden transparente und farbstarke Lackierungen erhalten. Die Rheologie wird mit 1-2 bewertet und die Viskosität beträgt 4,3 s.

### Beispiel 22

In ein Druckgefäß werden 556 Teile Polyphosphorsäure, die 85,0 % P₂O₅ enthält, eindosiert. Danach werden 79,4 Teile 2,5-Di-(2-chloranilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2250 Teilen Phosphorsäure, 30 %ig, bei
140 °C unter Druck hydrolysiert. Dabei steigt die Temperatur auf 155 °C an. Es wird 0,5 Stunden bei 155 °C gerührt. Danach wird auf 60 °C abgekühlt, das Pigment abgesaugt, mit Wasser neutral gewaschen und bei 80 °C getrocknet.
Man erhält 72,6 Teile Pigment der allgemeinen Formel (I), in der R¹ ein Wasserstoffatom und R² ein Chloratom bedeutet. Im AM-Lack werden transparente und farbstarke Lackierungen erhalten. Die Rheologie wird mit 4 bewertet und die Viskosität beträgt 4,4 s.

### Beispiel 23

In ein Druckgefäß werden 365 Teile Polyphosphorsäure, die 85,0 % P₂O₅ enthält, eindosiert. Danach werden 73,0 Teile 2,5-Di-(3-chlor-4-methyl-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2250 Teilen Phosphorsäure, 30 %ig, bei 140 °C unter Druck hydrolysiert. Dabei steigt die Temperatur auf 155 °C an. Es wird 0,5 Stunden bei 155 °C gerührt. Danach wird auf 60 °C abgekühlt, das Pigment abgesaugt, mit Wasser neutral gewaschen und bei 80 °C getrocknet.
Man erhält 67,1 Teile Pigment der allgemeinen Formel (I), in der R¹ ein Chloratom und R² eine Methylgruppe bedeutet. 28,5 Teile Pigment werden mit 1,5 Teilen Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist.
Man erhält eine Pigmentzubereitung, die im AM-Lack sehr transparente und farbstarke Lackierungen liefert.

### Beispiel 24

In ein Druckgefäß werden 367,6 Teile Polyphosphorsäure, die 85,0 % P₂O₅ enthält, eindosiert. Danach werden 73,5 Teile 2,5-Di-(3-chloranilino) - terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 2250 Teilen Phosphorsäure, 30 %ig, und 100 Teilen Xylol von 140 °C unter Druck hydrolysiert. Dabei steigt die Temperatur auf 155 °C an. Es wird 0,5 Stunden bei 155 °C gerührt. Danach wird auf 90 °C abgekühlt und das Xylol bis 100 °C am Übergang abdestilliert. Anschließend wird das Pigment abgesaugt, mit Wasser neutral gewaschen und bei 80 °C getrocknet.
Man erhält 67,2 Teile Pigment (C.I. Pigment Red 209). Im AM-Lack werden transparente und farbstarke Lackierungen erhalten. Die Rheologie wird mit 5 bewertet und die Viskosität beträgt 4,2 s.

### Beispiel 25

In ein Druckgefäß werden 352 Teile Polyphosphorsäure, die 85,0 % P₂O₅ enthält, eindosiert. Danach werden 70,4 Teile 2,5-Di-(4-N-methyl-carbonamido-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 2250 Teilen Phosphorsäure, 30 %ig, von 140 °C unter Druck hydrolysiert. Dabei steigt die Temperatur auf 155 °C an. Es wird 0,5 Stunden bei 155 °C gerührt. Danach wird auf 60 °C abgekühlt, das Pigment abgesaugt, mit Wasser neutral gewaschen und bei 80 °C getrocknet.
Man erhält 66,8 Teile Pigment der allgemeinen Formel (I), in der R¹ ein Wasserstoffatom und R² eine N-Methyl-carbonamidgruppe bedeutet. Im AM-Lack werden farbstarke Lackierungen erhalten. Die Rheologie wird mit 5 bewertet und die Viskosität beträgt 3,9 s.

## Patentansprüche

1. Verfahren zur Herstellung von Pigmenten, Mischkristallpigmenten und Pigmentzubereitungen auf Basis von linearen unsubstituierten oder substituierten Chinacridonen der allgemeinen Formel (I) 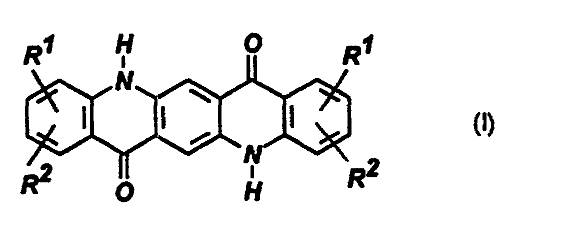 worin die Substituenten R¹ und R² gleich oder verschieden sind und Wasserstoff-, Chlor-, Brom- oder Fluoratome oder C₁-C₄-Alkyl-,C₁-C₄-Alkoxy-, Carbonamidogruppen, die durch C₁-C₆-Alkylgruppen substituiert sein können; oder Phenoxy- oder C₆-C₁₀-Arylringe, an die noch weitere aromatische, aliphatische oder heterocyclische Ringe annelliert sein können, bedeuten, **dadurch gekennzeichnet, daß** man das bei der Cyclisierung der Dianilinoterephthalsäure der Formel (Ia) 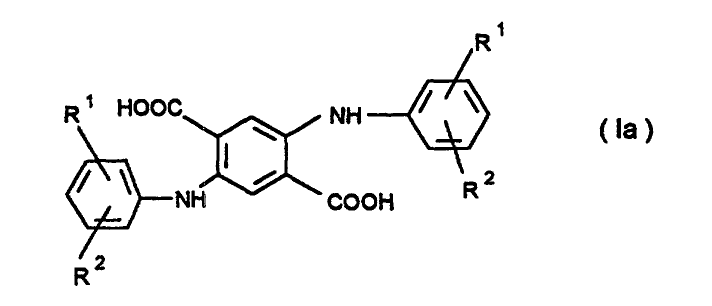 mit Polyphosphorsäure oder - ester entstandene Reaktionsgemisch bei einer Temperatur von oder über 110 °C mit Wasser oder einer wäßrigen Mineralsäurelösung hydrolysiert und anschließend die dabei erhaltenen Pigmente direkt isoliert; oder die entstehenden Präpigmente, gegebenenfalls nach Zusatz von organischen Lösemitteln, einer Finishbehandlung unterwirft und die Pigmente isoliert; oder die entstehenden grobkristallinen Rohpigmente einer Feinverteilung unterwirft und anschließend die Pigmente isoliert; oder die bei der Feinverteilung erhaltenen Präpigmente, gegebenenfalls nach Zusatz von Lösemitteln, einer Finishbehandlung unterwirft und die Pigmente isoliert.

2. Verfahren gemäß Anspruch 1, **dadurch gekennzeichnet, daß** die Cyclisierung der Dianilinoterephthalsäure mit Polyphosphorsäure oder -estern bei 80 bis 150 °C, vorzugsweise bei 120 bis 140 °C, durchgeführt wird.

3. Verfahren gemäß Anspruch 1 oder 2, **dadurch gekennzeichnet, daß** man bei der Cyclisierung die 3- bis 10fache Menge Polyphosphorsäure oder -ester, bezogen auf das Gewicht der Dianilinoterephthalsäure, einsetzt.

4. Verfahren gemäß einem oder mehreren der Ansprüche 1 bis 3, **dadurch gekennzeichnet, daß** man das bei der Cyclisierung entstandene Reaktionsgemisch bei 110 bis 180 °C, vorzugsweise bei 135 bis 165 °C, mit Wasser oder einer wäßrigen Orthophosphorsäurelösung unter Druck hydrolysiert.

5. Verfahren gemäß einem oder mehreren der Ansprüche 1 bis 4, **dadurch gekennzeichnet, daß** man das bei der Cyclisierung entstandene Reaktionsgemisch in einem statischen Mischer hydrolysiert.

6. Verfahren gemäß einem oder mehreren der Ansprüche 1 bis 5, **dadurch gekennzeichnet, daß** man an einer beliebigen Stelle des Verfahrens organische Lösemittel, oberflächenaktive Mittel und/oder Pigmentdispergatoren zusetzt.

7. Verfahren gemäß einem oder mehreren der Ansprüche 1 bis 6, **dadurch gekennzeichnet, daß** man die nach der Hydrolyse vorliegenden grobkristallinen Rohpigmente einer Trocken- oder Naßmahlung unterwirft.

8. Verfahren gemäß Anspruch 7, **dadurch gekennzeichnet, daß** man die grobkristallinen Rohpigmente in einem flüssigen, wäßrigen, wäßrig-organischen oder organischen Medium auf einer Rührwerkskugelmühle mit einer Leistungsdichte von über 2,5 kW pro Liter Mahlraum und einer Rührwerksumfangsgeschwindigkeit von über 12 m/s unter der Einwirkung von Mahlkörpern vom Durchmesser kleiner als 1 mm bis zum gewünschten Feinverteilungsgrad naßvermahlt.

9. Verfahren gemäß einem oder mehreren der Ansprüche 1 bis 8, **dadurch gekennzeichnet, daß** die Finishbehandlung der Präpigmente mit Alkanolen oder Carbonsäureamiden durchgeführt wird.

10. Verfahren gemäß einem oder mehreren der Ansprüche 1 bis 9, **dadurch gekennzeichnet, daß** man die Finishbehandlung der Präpigmente bei Temperaturen von 50 bis 200 °C für 1 bis 24 Stunden durchführt.

11. Verfahren gemäß einem oder mehreren der Ansprüche 1 bis 10, **dadurch gekennzeichnet, daß** man zu einem beliebigen Zeitpunkt des Verfahrens einen oder mehrere Pigmentdispergatoren der allgemeinen Formel (II)
P ― Xm (II)
zugibt, in der
P für einen m-wertigen Rest eines linearen Chinacridons der allgemeinen Formel (I) steht, in dem R¹ und R² gleich sind und Wasserstoffatome oder Methylgruppen darstellen,
X eine Gruppe der Formel (III)
-COOM (III)
oder eine Gruppe der Formel (IV)
-SO₃M (IV)
darstellt, worin
M das Wasserstoffion H⁺ oder das Äquivalent M^{r+}/r eines r-wertigen Metallkations bezeichnet, wobei r für den betreffenden Fall dann übereinstimmend eine der Zahlen 1, 2 oder 3 ist; oder ein Ammoniumion mit der Struktur N⁺R³R⁴R⁵R⁶ ist, wobei die Substituenten R³, R⁴, R⁵ und R⁶ unabhängig voneinander jeweils Wasserstoffatome, C₁-C₃₀-Alkyl-, C₂-C₃₀-Alkenyl- oder C₅-C₃₀-Cycloalkylgruppen, die durch Hydroxy-, Di-(C₁-C₄- alkyl)amino-, Carboxy- oder Carboxamidgruppen substituiert sein können, bedeuten; oder
X eine Gruppe der Formel (V) 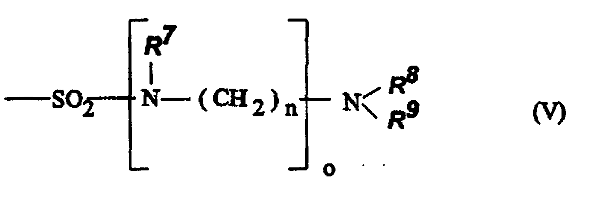 darstellt, worin R⁸ und R⁹ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁸ und R⁹ gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, R⁷ ein Wasserstoffatom oder eine C₁-C₄-Alkylgruppe ist, n eine Zahl von 1 bis 6, o die Zahl 0 oder 1; oder
X eine Gruppe der Formel (VI) 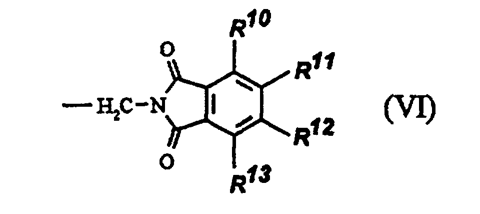 darstellt, wobei R¹⁰, R¹² und R¹³ ein Wasserstoff-, Fluor-, Chlor-oder Bromatom und R¹¹ ein Wasserstoff-, Fluor, Chlor- oder Bromatom ist oder eine Nitro-, C₁-C₅-Alkyl-, C₁-C₆-Alkoxy- oder Benzoylaminogruppe bedeutet;
und m eine Zahl von 1 bis 4 ist.

12. Verfahren gemäß Anspruch 11, **dadurch gekennzeichnet, daß** man pro Gewichtseinheit Rohpigment, Präpigment oder Pigment zwischen 0,1 und 20 Gew.-%, vorzugsweise 3 bis Gew.-10 %, Pigmentdispergator zugibt.

13. Verfahren gemäß einem oder mehreren der Ansprüche 1 bis 12, **dadurch gekennzeichnet**, man vor oder nach der Finishbehandlung 1 bis 20 Gew.-%, bezogen auf das Gewicht des Pigments, eines Peroxodisulfats zusetzt.

## Claims

1. A process for preparing pigments, mixed crystal pigments and pigment preparations based on linear unsubstituted or substituted quinacridones of the formula (I) 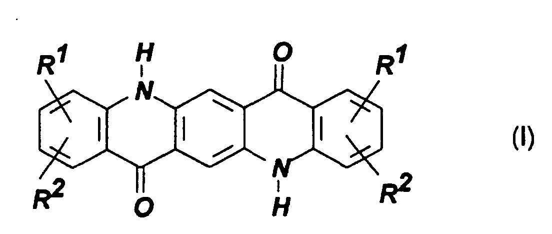 in which the substituents R¹ and R² are identical or different and are hydrogen, chlorine, bromine or fluorine atoms or are C₁-C₄-alkyl, C₁-C₄-alkoxy or carboxamido groups which may be substituted by C₁-C₆-alkyl groups; or are phenoxy or C₆-C₁₀-aryl rings onto which further aromatic, aliphatic or heterocyclic rings can be fused, which process comprises hydrolyzing the reaction mixture resulting from cyclization of the dianilinoterephthalic acid of the formula (Ia) 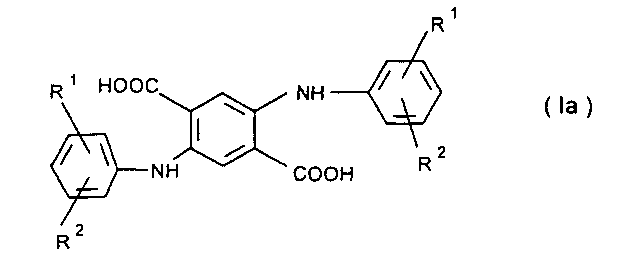 with polyphosphoric acid or polyphosphate at a temperature of or above 110°C with water or an aqueous mineral acid solution and then isolating the pigments thus obtained, directly; or subjecting the resulting prepigments, if desired after addition of organic solvents, to a finishing treatment and isolating the pigments; or subjecting the resulting coarsely crystalline crude pigments to fine dispersion and then isolating the pigments; or subjecting the prepigments obtained after fine dispersion, if desired after addition of solvents, to a finishing treatment and isolating the pigments.

2. The process as claimed in claim 1, wherein cyclization of the dianilinoterephthalic acid with polyphosphoric acid or polyphosphates is carried out at 80 to 150°C, preferably at 120 to 140°C.

3. The process as claimed in claim 1 or 2, wherein a 3-to 10-fold amount of polyphosphoric acid or polyphosphate, relative to the weight of the dianilinoterephthalic acid, is used for the cyclization.

4. The process as claimed in one or more of claims 1 to 3, wherein the reaction mixture resulting from cyclization is hydrolyzed with water or an aqueous orthophosphoric acid solution at 110 to 180°C, preferably at 135 to 165°C, under pressure.

5. The process as claimed in one or more of claims 1 to 4, wherein the reaction mixture resulting from cyclization is hydrolyzed in a static mixer.

6. The process as claimed in one or more of claims 1 to 5, wherein organic solvents, surface-active agents and/or pigment dispersants are added at any desired stage of the process.

7. The process as claimed in one or more of claims 1 to 6, wherein the coarsely crystalline crude pigments obtained after hydrolysis are subjected to dry or wet milling.

8. The process as claimed in claim 7, wherein the coarsely crystalline crude pigments are subjected to wet milling in a liquid, aqueous, aqueous-organic or organic medium in a stirred ball mill at an energy density of more than 2.5 kW per liter of milling space and a rotational speed of the stirrer of more than 12 m/s while being exposed to a grinding medium having a diameter of less than 1 mm until the desired degree of fine dispersion is reached.

9. The process as claimed in one or more of claims 1 to 8, wherein the finishing treatment of the prepigments is carried out with alkanols or carboxamides.

10. The process as claimed in one or more of claims 1 to 9, wherein the finishing treatment of the prepigments is carried out at temperatures of 50 to 200°C for 1 to 24 hours.

11. The process as claimed in one or more of claims 1 to 10, wherein addition is made at any desired time in the process of one or more pigment dispersants of the formula (II)
P -Xm (II),
in which
P is an m-valent radical of a linear quinacridone of the formula (I), in which R¹ and R² are identical and are hydrogen atoms or methyl groups,
X is a group of the formula (III)
-COOM (III)
or a group of the formula (IV)
-SO₃M (IV),
in which
M is a hydrogen ion H⁺ or the equivalent M^{r+}/r of an r-valent metal cation in which r in the relevant case is consistently 1, 2, or 3; or an ammonium ion having the structure N⁺R³R⁴R⁵R⁶, in which the substituents R³, R⁴, R⁵ and R⁶ are each, independently of one another, hydrogen atoms, C₁-C₃₀-alkyl, C₂-C₃₀-alkenyl or C₅-C₃₀-cycloalkyl groups which may be substituted by hydroxyl, di (C₁-C₄-alkyl)amino, carboxyl or carboxamido groups; or
X is a group of the formula (V) 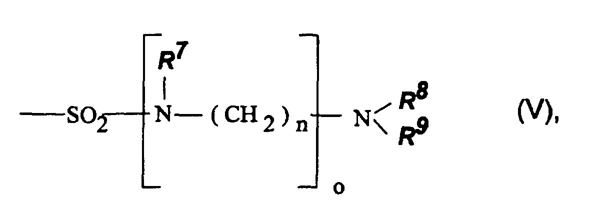 in which R⁶ and R⁹ are each, independently of one another, a hydrogen atom, a C₁-C₂₀-alkyl, C₂-C₂₀-alkenyl or C₅-C₇-cycloalkyl group, or in which R⁸ and R⁹ together with the adjacent nitrogen atom form an aliphatic or aromatic five- or six-membered heterocyclic system containing in each case 1 to 3 identical or different hetero atoms in the ring selected from the group consisting of nitrogen, oxygen and sulfur, R⁷ is a hydrogen atom or a C₁-C₄-alkyl group, n is a number from 1 to 6, o is 0 or 1; or
X is a group of the formula (VI) 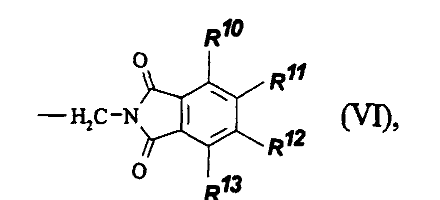 in which R¹⁰, R¹² and R¹³ are each a hydrogen, fluorine, chlorine or bromine atom and R¹¹ is a hydrogen, fluorine, chlorine or bromine atom or a nitro, C₁-C₅-alkyl, C₁-C₆-alkoxy or benzoylamino group;
and m is a number from 1 to 4.

12. The process as claimed in claim 11, wherein between 0.1 and 20% by weight, preferably 3 to 10% by weight, of pigment dispersant is added per weight unit of crude pigment, prepigment or pigment.

13. The process as claimed in one or more of claims 1 to 12, wherein 1 to 20% by weight of a peroxodisulfate, relative to the weight of the pigment, is added before or after the finishing treatment.

## Revendications

1. Procédé pour la préparation de pigments, de pigments à cristaux mixtes et de préparations pigmentaires à base de quinacridones linéaires, non substituées ou substituées, de formule générale (I) 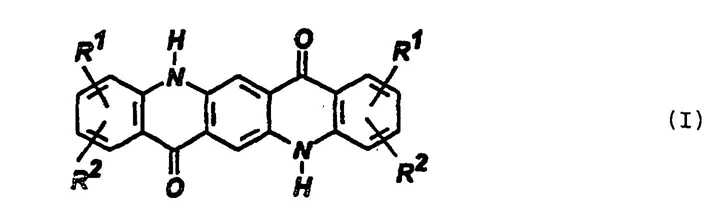 où les substituants R¹ et R² sont identiques ou différents et représentent des atomes d'hydrogène, de chlore, de brome ou de fluor ou des groupes alkyle en C₁-C₄, alkoxy en C₁-C₄, carboxamido, qui peuvent être substitués par des groupes alkyle en C₁-C₆ ; ou des cycles phénoxy ou aryle en C₆-C₁₀, sur lesquels peuvent encore être condensés d'autres cycles aromatiques, aliphatiques ou hétérocycliques, **caractérisé en ce qu'**on hydrolyse le mélange réactionnel obtenu dans la cyclisation de l'acide dianilinotéréphtalique de formule (Ia) 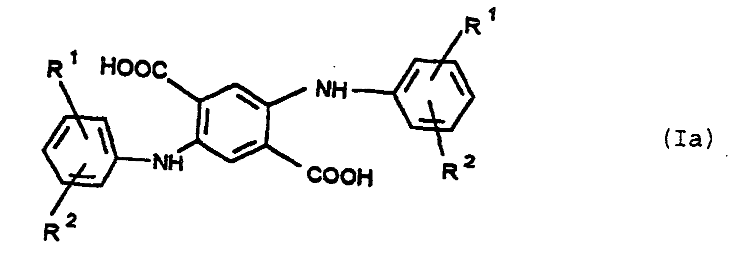 avec l'acide polyphosphorique et des esters de l'acide polyphosphorique, à une température de ou supérieure à 110°C, avec de l'eau ou une solution aqueuse d'acide minéral et ensuite on isole directement les pigments obtenus ; ou on soumet les prépigments obtenus, éventuellement après addition de solvants organiques, à un traitement de finition et on isole les pigments ; ou on soumet les pigments bruts à cristaux grossiers à une division fine et on isole les pigments ensuite ; ou on soumet les prépigments obtenus dans la division fine, éventuellement par addition de solvants, à un traitement de finition et on isole les pigments.

2. Procédé selon la revendication 1, **caractérisé en ce qu'**on met en oeuvre la cyclisation de l'acide dianilinotéréphtalique avec l'acide polyphosphorique ou des esters de l'acide polyphosphorique à une température de 80 à 150°C, de préférence de 120 à 140°C.

3. Procédé selon la revendication 1 ou 2, **caractérisé en ce qu'**on utilise pour la cyclisation la quantité d'acide polyphosphorique ou d'esters de l'acide polyphosphorique 3 à 10 fois, par rapport au poids de l'acide dianilinotéréphtalique.

4. Procédé selon une ou plusieurs des revendications 1 à 3, **caractérisé en ce qu'**on hydrolyse le mélange réactionnel obtenu dans la cyclisation à une température de 110 à 180°C, de préférence de 135 à 165°C, avec l'eau ou une solution d'acide orthophosphorique sous pression.

5. Procédé selon une ou plusieurs des revendications 1 à 4, **caractérisé en ce qu'**on hydrolyse dans un mélangeur statique le mélange réactionnel obtenu dans la cyclisation.

6. Procédé selon une ou plusieurs des revendications 1 à 5, caractérisé en ce q'on ajoute à un stade quelconque de procédé des solvants organiques, des agents de surface et/ou dispersants de pigment.

7. Procédé selon une ou plusieurs des revendications 1 à 6, caratérisé en ce qu'on soumet les pigments bruts à cristaux grossiers, présents après l'hydrolyse, à un broyage par voie sèche ou par voie humide.

8. Procédé selon la revendication 7, caractérisé en qu'on broie les pigments bruts à cristaux grossiers dans un milieu liquide, aqueux, aqueux-organique ou organique, à l'aide d'un broyeur à microbilles avec une puissance volumique supérieure à 2,5 kW par litre de chambre de broyage et une vitesse périphérique de broyeur supérieure à 12 m/s, sous l'effet des corps broyants, ayant un diamètre inférieur à 1 mm, jusqu'à l'obtention du degré de division fine voulu.

9. Procédé selon une ou plusieurs des revendications 1 à 8, **caractérisé en ce qu'**on réalise le traitement de finition des prépigments par des alcanols et des carboxamides.

10. Procédé selon une ou plusieurs des revendications 1 à 9, **caractérisé en ce qu'**on réalise le traitement de finition des prépigments à une température de 50 à 200°C pendant une durée de 1 à 24 heures.

11. Procédé selon une ou plusieurs des revendications 1 à 10, **caractérisé en ce qu'**on ajoute à un stade quelconque du procédé un ou plusieurs des dispersants de pigment de formule générale (II)
P ― Xm (II),
dans laquelle P représente un reste m-valent d'une quinacridone linéaire de formule générale (I), où R¹ et R² sont identiques et représentent des atomes d'hydrogène ou des groupes méthyle,
X représente un groupe de formule (III)
-COOM (III)
ou un groupe de formule (IV)
-SO₃M (IV)
où
M représente un ion hydrogène H⁺ ou l'équivalent M^{r+}/r d'un cation métallique r-valent, où r, pour le cas concerné, correspond à un nombre 1, 2 ou 3 ; ou un ion ammonium répondant à la structure N⁺R³R⁴R⁵R⁶, les substituants R³, R⁴, R⁵ et R⁶ représentent chacun, indépendamment les uns des autres, des atomes d'hydrogène, des groupes alkyle en C₁-C₃₀, alcényle en C₂-C₃₀ ou cycloalkyle en C₅-C₃₀, qui peuvent être substitués par des groupes hydroxy, di-(alkyl en C₁-C₄)amino, carboxy ou carboxamido, ou
X représente un groupe de formule 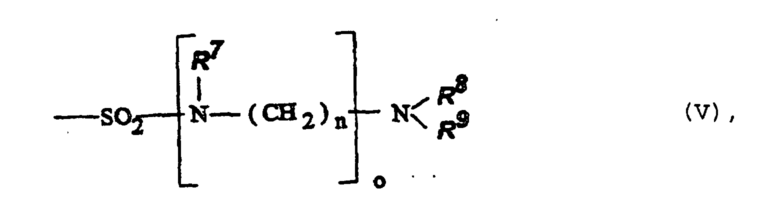 où R⁸ et R⁹ représentent chacun, indépendamment l'un de l'autre, un atome d'hydrogène, un groupe alkyle en C₁-C₂₀, alcényle en C₂-C₂₀ ou un groupe cycloalkyle en C₅-C₇, ou dans lequel R⁸ et R⁹ forment conjointement avec l'atome d'azote adjacent un système hétéro-cyclique à 5 ou 6 chaînons, aliphatique ou aromatique, à chaque fois avec 1 à 3 hétéroatomes nucléaires identiques ou différents pris dans le groupe des atomes d'azote, d'oxygène ou de soufre ; R⁷ représente un atome d'hydrogène ou un groupe alkyle en C₁-C₄, n va de 1 à 6, o vaut 0 ou 1 ;
ou
X représente un groupe de formule (VI) 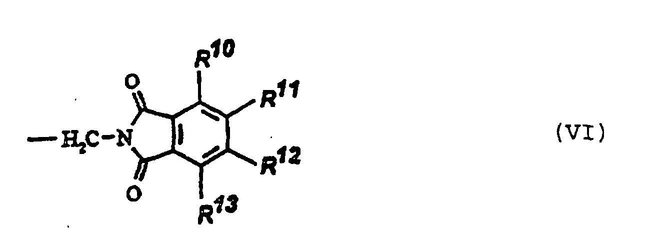 R¹⁰, R¹¹ et R¹³ représentent un atome d'hydrogène, de fluor, de chlore ou de brome, et R¹¹. représente un atome d'hydrogène, de fluor, de chlore ou de brome, ou un groupe nitro, alkyle en C₁-C₅, alkoxy en C₁-C₆ ou benzoyle ; et m va de 1 à 4.

12. Procédé selon la revendication 11, **caractérisé en ce qu'**on ajoute une quantité de dispersant de pigment comprise entre 0,1 et 20 % en masse, de préférence de 3 à 10 % en masse par unité en masse de pigment brut, de prépigment ou de pigment.

13. Procédé selon une ou plusieurs des revendications 1 à 12, **caractérisé en ce qu'**on ajoute avant ou après le traitement de finition 1 à 20 % en masse par rapport au poids du pigment, d'un peroxodisulfate.
